# EUROPÄISCHE PATENTSCHRIFT

(11) **EP 3 227 826 B1**
(45) Veröffentlichungstag und Bekanntmachung des Hinweises auf die Patenterteilung: **22.05.2024**
(21) Anmeldenummer: 15801403.5
(22) Anmeldetag: 26.11.2015
(51) Int. Cl.: G06V 20/58, G06V 20/59

(54) **VERFAHREN ZUM BESTIMMEN EINES FAHRERSPEZIFISCHEN TOTWINKELFELDES FÜR EIN FAHRERASSISTENZSYSTEM, FAHRERASSISTENZSYSTEM SOWIE KRAFTFAHRZEUG**
METHOD FOR DETERMINING A DRIVER-SPECIFIC BLIND SPOT FIELD FOR A DRIVER ASSISTANCE SYSTEM, DRIVER ASSISTANCE SYSTEM AND MOTOR VEHICLE
PROCÉDÉ DE DÉTERMINATION D'UN CHAMP D'ANGLE MORT SPÉCIFIQUE AU CONDUCTEUR POUR UN SYSTÈME D'ASSISTANCE AU CONDUCTEUR, SYSTÈME D'ASSISTANCE AU CONDUCTEUR ET VÉHICULE AUTOMOBILE

(30) Priorität: 04.12.2014 DE 102014117830
(43) Veröffentlichungstag der Anmeldung: 11.10.2017
(73) Patentinhaber: Valeo Schalter und Sensoren GmbH, 74321 Bietigheim-Bissingen (DE)
(72) Erfinder: BRANDT, Timo, 74321 Bietigheim-Bissingen (DE)
(74) Vertreter: Withopf, Kristina
(86) Internationale Anmeldenummer: PCT/EP2015/077725
(87) Internationale Veröffentlichungsnummer: WO 2016/087292

(56) Entgegenhaltungen:
- EP-A1- 1 361 115
- EP-A1- 2 741 270
- US-A1- 2009 063 053

## Beschreibung

Die Erfindung betrifft ein Verfahren zum Betreiben eines Fahrerassistenzsystems für ein Kraftfahrzeug, bei welchem ein fahrerspezifisches Totwinkelfeld in einem Umgebungsbereich des Kraftfahrzeugs bestimmt wird. Die Erfindung betrifft außerdem ein System, ein Fahrerassistenzsystem sowie ein Kraftfahrzeug.

Als Totwinkelfeld bzw. toter Winkel wird im Straßenverkehr ein durch einen Kraftfahrzeugführer bzw. Fahrer nicht einsehbarer Bereich im Umgebungsbereich des Kraftfahrzeugs bezeichnet. Der tote Winkel verhindert bzw. vermindert die Sicht des Fahrers auf das Verkehrsgeschehen. Dies ist vor allem bei Spurwechselvorgängen und Abbiegevorgängen des Kraftfahrzeugs relevant, bei welchem sich dem Kraftfahrzeug auf einer benachbarten Spur von hinten ein anderer Verkehrsteilnehmer, beispielsweise ein anderes Kraftfahrzeug, aber auch ein Fußgänger oder ein Fahrradfahrer, nähert. Solche anderen Verkehrsteilnehmer sind im toten Winkel besonders unfallgefährdet.

Um kritische Verkehrssituationen zu vermeiden, sind aus dem Stand der Technik Fahrerassistenzsysteme, beispielsweise Spurwechselassistenten oder Totwinkelassistenten, bekannt, welche einen Umgebungsbereich, insbesondere das Totwinkelfeld, des Kraftfahrzeugs überwachen und den Fahrer bei einem Spurwechsel vor drohenden Kollisionen mit einem auf einer Nachbarspur herannahenden Fahrzeug warnen. Dazu sind üblicherweise Abmessungen sowie die Lage des Totwinkelfeldes von Werk aus voreingestellt und an eine Geometrie bzw. Konstruktion des Kraftfahrzeugs, beispielsweise eine Größe des Kraftfahrzeugs sowie eine Anzahl an Fenstern und Rückspiegeln des Kraftfahrzeugs, angepasst.

Da ein Ausmaß bzw. eine Lage des Totwinkelfelds aber auch von physischen Eigenschaften des Fahrers, beispielsweise einer Körpergröße oder einer Sehschärfe des Fahrers, abhängt, kann es sein, dass das voreingestellte Totwinkelfeld nicht für jeden Kraftfahrzeugführer gleichermaßen geeignet ist. So schlägt beispielsweise die DE 10 2008 000 051 A1 ein variables Warnsystem für den toten Winkel zum Erfassen von Objekten in einem toten Winkel eines Kraftfahrzeugs vor.

EP1361115A1 betrifft ein Verfahren zum Betreiben eines Fahrzeugumfeldüberwachungssystems und ein Fahrzeugumfeldüberwachungssystem eines Fahrzeugs, das sich dadurch kennzeichnet, dass ein Signalgeber ein Warnsignal erzeugt, wenn sich ich ein Gegenstand, insbesondere ein anderes Fahrzeug, in dem den für den Fahrzeuglenker in den Rückspiegeln nicht sichtbaren Bereichen TW (tote Winkel) befindet.

Gemäß dem Stand der Technik werden jedoch üblicherweise die physischen Eigenschaften des Fahrers nur unzulänglich beachtet. Gerade bei einem Trend hin zu einer immer älter werdenden Gesellschaft und der damit einhergehenden eingeschränkten körperlichen Beweglichkeit bei unvermindertem Mobilitätswunsch macht es erstrebenswert, bestehende Fahrerassistenzsysteme adaptierbar, insbesondere automatisch adaptierbar, zu machen.

Es ist Aufgabe der vorliegenden Erfindung, ein Verfahren zu schaffen, mittels welchem ein Totwinkelfeld individueller und spezifischer an einen Kraftfahrzeugführer angepasst werden kann. Es ist außerdem Aufgabe der Erfindung, ein System, ein Fahrerassistenzsystem sowie ein Kraftfahrzeug zu schaffen.

Diese Aufgabe wird erfindungsgemäß durch ein Verfahren, ein System, ein Fahrerassistenzsystem sowie ein Kraftfahrzeug mit den Merkmalen gemäß den unabhängigen Patentansprüchen gelöst.

Bei einem erfindungsgemäßen Verfahren zum Betreiben eines Fahrerassistenzsystems für ein Kraftfahrzeug wird ein fahrerspezifisches Totwinkelfeld in einem Umgebungsbereich des Kraftfahrzeugs bestimmt. Darüber hinaus wird zumindest ein Begrenzungsrand eines fahrerspezifischen Blickfelds eines Kraftfahrzeugführers in Abhängigkeit eines Bewegungsverhaltens eines Kopfes des Kraftfahrzeugführers bestimmt und in Abhängigkeit des zumindest einen bestimmten Begrenzungsrandes des fahrerspezifischen Blickfeldes das Ausmaß und/oder eine örtliche Lage des fahrerspezifischen Totwinkelfelds in dem Umgebungsbereich des Kraftfahrzeugs bestimmt. Das Bewegungsverhalten des Kopfes erfolgt in Form einer Drehbewegung des Kopfes des Kraftfahrzeugführers.

Das Bewegungsverhalten des Kopfes des Kraftfahrzeugführers wird zu mehreren Zeitpunkten erfasst und das fahrerspezifische Blickfeld aus den zu mehreren Zeitpunkten erfassten Bewegungsverhalten gemittelten Bewegungsverhalten des Kopfes bestimmt.

Somit kann auf zuverlässigere Weise ein tatsächliches Bewegungsverhalten des Kopfes des Kraftfahrzeugführers ermittelt werden. So kann beispielsweise verhindert werden, dass für einen Fahrer, welcher beispielsweise einmal eine Durchführung des Schulterblickes vergisst, ein eingeschränktes Bewegungsverhalten ermittelt wird und daraufhin das fahrerspezifische Totwinkelfeld unverhältnismäßig groß gewählt wird. Auch können durch das mehrmalige Erfassen vorübergehende Einschränkungen, beispielsweise eine temporäre Nackenverletzung oder Halsverletzung, erkannt werden und das fahrerspezifische Totwinkelfeld vorübergehend an das eingeschränkte Blickfeld des Fahrers angepasst werden.

Ein Begrenzungsrand bezeichnet dabei insbesondere jene Grenze bzw. jene Grenzlinie des Blickfelds, welcher bzw. welche bei einer Projektion des Blickfelds in eine Horizontalebene und somit in eine Ebene, die durch die Fahrzeuglängsachse und die Fahrzeugquerachse aufgespannt wird, das Blickfeld mit seinem spezifischen dann insbesondere zweidimensionalen Kegel seitlich begrenzt. Der gesamte seitliche Begrenzungsrand ist dann durch die den Kegel begrenzenden beiden Grenzlinien gebildet. Insbesondere ist bei einem Fahrzeugführer derjenige Begrenzungsrand für das erfindungsgemäße Verfahren von vorrangiger Bedeutung, welcher abhängig von der Sitzposition des Fahrzeugführers im Kraftfahrzeug einer Kraftfahrzeuglängsseite näher liegend ist, als der andere Begrenzungsrand.

Als Blickfeld wird im Zusammenhang mit der Erfindung derjenige Bereich im Umgebungsbereich des Kraftfahrzeugs bezeichnet, welcher durch den Kraftfahrzeugführer bzw. den Fahrer mit seinen Augen erfasst werden kann. Das Blickfeld setzt sich hier aus einem sogenannten Gesichtsfeld, welches abhängig von einem physischen Sehvermögen bzw. einer Sehschärfe des Fahrers ist, sowie einem Schulterblickfeld, welches abhängig von einem Drehvermögen bzw. einer Drehbewegung des Fahrerkopfes ist, zusammen.

Als Gesichtsfeld des Fahrers werden alle zentralen und peripheren Punkte und Gegenstände im Umgebungsbereich bezeichnet, welche bei ruhiger, gerader Kopfhaltung und geradeaus gerichtetem, bewegungslosem Blick, beispielsweise bei einem Blick durch eine Windschutzscheibe des Kraftfahrzeugs, visuell wahrgenommen werden können, auch ohne sie direkt zu fixieren. Üblicherweise beträgt eine horizontale Ausdehnung des Gesichtsfeldes, also ein Öffnungswinkel des Gesichtsfeldes zwischen zwei Begrenzungsrändern des Gesichtsfeldes, bei einem erwachsenen Menschen mit einem durchschnittlichen Sehvermögen etwa 180°. Bei Menschen mit einem eingeschränkten Sehvermögen, beispielsweise einer geringeren Sehschärfe, wie sie mit zunehmendem Alter des Menschen auftreten kann, kann sich die horizontale Ausdehnung des Gesichtsfeldes, also der Öffnungswinkel, verringern. Dadurch sind insbesondere Objekte, welche für den Menschen mit durchschnittlichem Sehvermögen in der Nähe der Begrenzungsränder bzw. einem peripheren Sichtbereich noch sichtbar waren, für den Menschen mit dem eingeschränkten Sehvermögen nicht mehr sichtbar.

Als Schulterblickfeld wird hier derjenige Bereich bezeichnet, welchen der Kraftfahrzeugführer durch einen sogenannten Schulterblick, also ein Drehen des Kopfes um eine Hochachse des Fahrersitzes, einsehen bzw. visuell wahrnehmen kann. Eine Ausdehnung des Schulterblickfeldes ist dabei üblicherweise abhängig von einem Bewegungsspielraum des Kopfes bzw. einer Drehbewegung des Kopfes, welche der Fahrer beim Schulterblick durchführt. Mit anderen Worten bedeutet dies, dass das Schulterblickfeld eines Fahrer, welcher seinen Kopf nur geringfügig dreht bzw. drehen kann oder gar keinen Schulterblick durchführt, eine geringere Ausdehnung aufweist, als das Schulterblickfeld eines Fahrers, welcher bei gleichem Sehvermögen seinen Kopf um einen größeren Winkel dreht bzw. drehen kann. Das Drehvermögen bzw. die Drehbewegung kann aufgrund körperlicher Defizite des Fahrers, beispielsweise durch eine reduzierte Beweglichkeit im Halsbereich und/oder im Nackenbereich, eingeschränkt sein.

Somit ist das Blickfeld, insbesondere eine Ausdehnung des Blickfeldes und somit ein Gesamtöffnungswinkel zwischen den Begrenzungsrändern des Blickfeldes, bis zu welchen der Fahrer Objekte im Umgebungsbereich wahrnehmen kann, abhängig von einem physischen Sehvermögen als und/oder einer Drehbewegung des Fahrerkopfes. Basierend auf dem individuellen Sehvermögen des Fahrers und/oder der individuellen Drehbewegung des Fahrerkopfes wird ein fahrerspezifisches Blickfeld ermittelt, welches einen fahrerspezifischen Öffnungswinkel zwischen zwei Begrenzungsrändern des fahrerspezifischen Blickfeldes aufweist, ermittelt.

In Abhängigkeit dieses ermittelten Begrenzungsrandes wird eine Lage und/oder ein Ausmaß des fahrerspezifischen Totwinkelfeldes angepasst. Somit können insbesondere Objekte, welche sich bei einem Fahrer mit durchschnittlichem Sehvermögen bereits in dessen Blickfeld befinden, sich aber bei einem Fahrer mit eingeschränktem Sehvermögen nach wie vor in dessen fahrerspezifischen Totwinkelfeld befinden, durch das Fahrerassistenzsystem erfasst werden. So kann beispielsweise ein optisches und/oder akustisches Warnsignal bzw. Alarmsignal erzeugt werden, wenn sich das Objekt, beispielsweise ein anderes Kraftfahrzeug, in dem fahrerspezifischen Totwinkelfeld des Fahrers befindet.

Das erfindungsgemäße Verfahren weist also den Vorteil auf, dass physische Eigenschaften des Fahrers sowie Verhaltensweisen des Fahrers bei der Bestimmung des Totwinkelfeldes berücksichtigt werden. Somit können Bereiche im Umgebungsbereich des Kraftfahrzeugs überwacht werden, welche beispielsweise aufgrund körperlicher Einschränkungen des Fahrers für diesen nicht einsehbar sind.

Besonders bevorzugt wird das fahrerspezifische Totwinkelfeld in seinen Ausmaßen und/oder in seiner örtlichen Lage angrenzend an den Begrenzungsrand des fahrerspezifischen Blickfeldes und/oder in einem vorgegebenen Überlappungsbereich überlappend mit dem fahrerspezifischen Blickfeld bestimmt. Die Begrenzungsränder des fahrerspezifischen Blickfeldes ergeben sich durch den Gesamtöffnungswinkel, um welchen der Fahrer bei einem Schulterblick in Richtung des Fensters der Fahrerseite sowie bei einem Blick durch die Fahrzeugmitte beim Rückwärtsfahren seinen Kopf drehen kann. Angrenzend an diese Begrenzungsränder und/oder in dem vorgegebenen Überlappungsbereich mit dem fahrerspezifischen Blickfeld überlappend wird in vorteilhafter Weise das fahrerspezifische Totwinkelfeld bestimmt. Wird das Totwinkelfeld nämlich nicht an das fahrerspezifische Blickfeld angepasst und beispielsweise nicht angrenzend gewählt, so kann es vorkommen, dass Objekte, welche sich in einem Bereich befinden, der weder durch das Fahrerassistenzsystem, noch durch den Fahrer selbst überwacht wird, übersehen werden und daher kein Alarmsignal ausgelöst wird. Wird das Totwinkelfeld jedoch derart gewählt, dass sich das Totwinkelfeld über den vorgegebenen Überlappungsbereich hinaus in das fahrerspezifische Blickfeld erstreckt, so kann es vorkommen, dass der Fahrer unnötigerweise durch das Alarmsignal gewarnt wird, obwohl er das Objekt bereits durch einen Schulterblick erkennen kann.

Gemäß einer vorteilhaften Ausgestaltung der Erfindung wird das fahrerspezifische Totwinkelfeld in seinen Ausmaßen parallel zu einer Längsachse des Kraftfahrzeugs abhängig von dem zumindest einen Begrenzungsrand des fahrerspezifischen Blickfeldes verändert. Das Totwinkelfeld, durch welches beispielsweise eine der Fahrerseite benachbarte Spur überwacht werden soll, kann beispielsweise als eine rechteckige Fläche ausgestaltet sein. Abhängig von dem ermittelten Begrenzungsrand des fahrerspezifischen Blickfeldes wird das Ausmaß bzw. eine räumliche Ausdehnung parallel zu der Längsachse des Kraftfahrzeugs, beispielsweise eine Länge des Totwinkelfeldes verändert. Dabei weist insbesondere das Totwinkelfeld eines Fahrers, dessen Blickfeld, beispielsweise aufgrund eines eingeschränkten Sehvermögens und/oder einer eingeschränkten Kopfdrehbewegung, einen geringen Öffnungswinkel aufweist, ein größeres Ausmaß, beispielsweise eine größere Länge, auf, als das Totwinkelfeld eines durchschnittlichen, uneingeschränkten Fahrers.

Vorzugsweise wird das fahrerspezifische Totwinkelfeld dadurch bestimmt, dass ein vorgegebenes Referenztotwinkelfeld in Abhängigkeit des bestimmten Bewegungsverhaltens des Kopfes des Kraftfahrzeugführers und/oder in Abhängigkeit des bestimmten Sehvermögens des Kraftfahrzeugführers des Kraftfahrzeugführers verändert wird. Ein solches Referenzblickfeld kann beispielsweise durch Werkseinstellungen vorgegeben sein und einem Blickfeld eines Fahrers mit mittlerer Körpergröße, normiertem Bewegungsspielraum des Kopfes sowie normiertem Sehvermögen entsprechen. Korrespondierend zu diesem Referenzblickfeld ist ein Referenztotwinkelfeld voreingestellt bzw. vorgegeben. Zum Vorgeben des fahrerspezifischen Totwinkelfeldes kann das Referenztotwinkelfeld vergrößert werden, wenn das ermittelte fahrerspezifische Blickfeld im Vergleich zu dem Referenzblickfeld eingeschränkt ist, also wenn das fahrerspezifische Blickfeld einen geringeren Öffnungswinkel aufweist als das Referenzblickfeld. Dies kann beispielsweise bei einem älteren Menschen, dessen Sehvermögen beeinträchtigt ist, oder bei einem Menschen, der aufgrund körperlicher Defizite, beispielsweise reduzierter Beweglichkeit im Hals- oder Nackenbereich, seinen Kopf nicht weit genug drehen kann, vorkommen. Bei einem Fahrer hingegen, der besonders gut sieht und/oder besonders beweglich ist, kann das Referenztotwinkelfeld zum Vorgeben des fahrerspezifischen Totwinkelfeldes verkleinert werden.

Es kann vorgesehen sein, dass das Referenztotwinkelfeld bei einem im Vergleich zu dem Referenztotwinkelfeld eingeschränkten Bewegungsverhalten und/oder einem eingeschränkten Sehvermögen des Fahrzeugführers zur Erzeugung des fahrerspezifischen Totwinkelfelds entlang einer Fortbewegungsrichtung des Kraftfahrzeugs nach vorne hin verlängert wird. Hier wird vor allem das Totwinkelfeld betrachtet, welches sich seitlich des Kraftfahrzeugs befindet und bei Spurwechselvorgängen durch das Kraftfahrzeug überwacht werden soll. Ein unverändertes, vorgegebenes Referenztotwinkelfeld würde den Bereich, welcher aufgrund der eingeschränkten Beweglichkeit und/oder des eingeschränkten Sehvermögens durch den Fahrer nicht erfasst wird, ebenfalls nicht erfassen. Somit wird das Referenztotwinkelfeld nach vorne hin, also in Fortbewegungsrichtung des Kraftfahrzeugs, verlängert. Eine hintere Begrenzung des Totwinkelfeldes wird hingegen bevorzugt nicht verändert. Somit werden beispielsweise ein Fahrer mit eingeschränktem Sehvermögen und/oder Bewegungsverhalten und ein Fahrer mit normalem Sehvermögen und/oder Bewegungsverhalten gewarnt, sobald sich ein anderes Fahrzeug dem Kraftfahrzeug auf der Nachbarspur von hinten nähert und in das Totwinkelfeld hineinfährt. Da sich der hintere Begrenzungsrand nicht verändert hat, werden beide Fahrer zum gleichen Zeitpunkt gewarnt. Sobald aber das andere Fahrzeug das Totwinkelfeld verlässt, weil es beispielsweise das Kraftfahrzeug überholt hat, werden die Fahrer nicht mehr gewarnt. Da das fahrerspezifische Totwinkelfeld des eingeschränkten Fahrers nach vorne hin verlängert ist, wird die Warnung zu einem späteren Zeitpunkt beendet, da das andere Fahrzeug das fahrerspezifische Totwinkelfeld aufgrund der größeren Länge zu einem späteren Zeitpunkt verlässt.

Es erweist sich als vorteilhaft, wenn das erfasste fahrerspezifische Blickfeld und/oder das fahrerspezifische Totwinkelfeld nach Abstellen des Kraftfahrzeugs abgespeichert wird und bei einem erneuten Führen des Kraftfahrzeugs durch den Kraftfahrzeugführer bereitgestellt wird. Das fahrerspezifische Blickfeld und damit das fahrerspezifische Totwinkelfeld können beispielsweise auf einem fahrzeuginternen Medium oder fahrzeugexternen Medium abgespeichert werden. Wenn beispielsweise mehrere Fahrer das Kraftfahrzeug nutzen bzw. führen, kann für jeden Fahrer ein Profil mit dessen fahrerspezifischen Blickfeld bzw. fahrerspezifischen Totwinkelfeld abgespeichert werden. Ein solches fahrzeugexternes Medium kann beispielsweise ein Fahrzeugschlüssel des jeweiligen Fahrers sein. Somit kann jeder Fahrer anhand seines Fahrzeugschlüssels identifiziert werden und das entsprechende fahrerspezifische Blickfeld bzw. das fahrerspezifische Totwinkelfeld gleich zu Fahrtbeginn bereitgestellt werden. Es kann aber auch vorgesehen sein, dass jeweilige Fahrer anhand einer Erfassungseinrichtung, beispielsweise anhand einer in der Fahrerkabine angeordneten Kamera, identifiziert werden können. Daraufhin kann das entsprechende Profil mit dem fahrerspezifischen Blickfeld bzw. dem fahrerspezifischen Totwinkelfeld, welches beispielsweise auf einem fahrzeuginternen Speichermedium abgespeichert ist, aufgerufen und bereitgestellt werden. Somit muss das fahrerspezifische Blickfeld und damit das fahrerspezifische Totwinkelfeld nicht bei jeder Fahrt neu berechnet werden. Die hier genannten Verfahren zur Fahreridentifizierung sind lediglich beispielhaft und nicht abschließend. Bevorzugt wird das abgespeicherte und bereitgestellte fahrerspezifische Blickfeld an ein, während des erneuten Führens des Kraftfahrzeugs ermitteltes Bewegungsverhalten des Kopfes des Kraftfahrzeugführers und/oder Sehvermögen des Kraftfahrzeugführers angepasst. Somit können beispielsweise das fahrerspezifische Blickfeld und damit das fahrerspezifische Totwinkelfeld kontinuierlich verbessert werden, indem das fahrerspezifische Totwinkelfeld durch eine Mittelung aller ermittelten fahrerspezifischen Blickfelder ermittelt wird. Auch kann das fahrerspezifische Blickfeld angepasst werden, falls ermittelt wird, dass ein Fahrer im Vergleich zur letzten Fahrt beispielsweise einen eingeschränkten Bewegungsspielraum des Kopfes, beispielsweise durch eine Verletzung, aufweist.

Es kann vorgesehen sein, dass ein Objekt, welches sich im Umgebungsbereich dem Kraftfahrzeug von hinten nähert, sowie eine Position des Objekts, insbesondere relativ zum Kraftfahrzeug, in dem Umgebungsbereich erfasst werden, eine Spontanbewegungsreaktion des Kraftfahrzeugführers auf das Objekt sowie ein Zeitpunkt der Spontanbewegungsreaktion erfasst werden und eine Position/Lage des fahrerspezifischen Begrenzungsrandes als diejenige Position bestimmt wird, welche das Objekt, insbesondere eine Frontseite des Objekts, zum Zeitpunkt der erfassten Spontanbewegungsreaktion in dem Umgebungsbereich insbesondere relativ zum Kraftfahrzeug aufgewiesen hat. Mittels des Erfassens der Bewegungsreaktion kann ein Sehvermögen und/oder eine Drehbewegung des Fahrerkopfes bestimmt werden. Dazu wird ein Objekt sowie dessen Position im Umgebungsbereich des Kraftfahrzeugs beobachtet. Dazu kann das Objekt sowie dessen Position in dem Umgebungsbereich kontinuierlich oder zu vorgegebenen Zeitpunkten beispielsweise durch eine fahrzeugseitige Erfassungseinrichtung erfasst werden.

Sobald das Objekt in das Blickfeld, insbesondere in einen peripheren Sichtbereich, des Fahrzeugführers eintritt, also den Begrenzungsrand des fahrerspezifischen Blickfeldes überschreitet, und der Fahrzeugführer eine Spontanreaktion, beispielsweise eine Blickrichtungsänderung oder eine Drehbewegung, durchführt, wird diese Spontanreaktion erfasst und das Objekt zu diesem Zeitpunkt als sich auf dem Begrenzungsrand befindlich identifiziert.

In einer Ausgestaltung der Erfindung wird als das Objekt ein Kraftfahrzeug erfasst, welches sich einem Fahrzeugheck des Kraftfahrzeugs in der gleichen Fortbewegungsrichtung auf einer benachbarten Spur von hinten nähert. Ein solches Fahrzeug wird in der Regel bei einem aktiven Spurwechselassistenten von einer fahrzeugseitigen Erfassungseinrichtung erfasst, um den Fahrer bei einem eventuellen Spurwechsel zu warnen. Gleichzeitig kann mittels des erfindungsgemäßen Verfahrens eine Reaktion bzw. eine Spontanreaktion des Fahrers auf das sich von hinten nähernde Fahrzeug erfasst und zum Ermitteln des fahrerspezifischen Blickfeldes verwendet werden.

Vorzugsweise wird das Objekt mittels zumindest eines fahrzeugseitigen Radarsensors erfasst. Solche an sich bekannten Radarsensoren können an einer Außenseite des Kraftfahrzeugs angeordnet sein und Objekte sowie deren Positionen in einem Umgebungsbereich des Kraftfahrzeugs erfassen.

In der Erfindung wird die Bewegungsreaktion des Fahrers mittels zumindest einer fahrzeugseitigen Kamera erfasst. Eine solche Kamera kann beispielsweise in einer Fahrzeugkabine des Kraftfahrzeugs angeordnet sein und eine Position, eine Lage und eine Bewegung des Fahrerkopfes erfassen. Solche Kameras können Teil eines sogenannten Kopf-Folge-Systems ("Head-Tracking-System") sein und den Bewegungsspielraum des Kopfes, insbesondere ein Azimut und Elevation, des jeweiligen Fahrers erfassen. Zusätzlich kann mittels der Kamera auch ein Blick bzw. eine Blickrichtung des Fahrzeugführers erfasst werden. Dies wird auch als Blickerfassung ("Eye-Tracking") bezeichnet. Insbesondere werden das durch den Radarsensor erfasste Objekt und die von der Kamera erfasste Bewegungsreaktion zum Ermitteln des fahrerspezifischen Blickfeldes verwendet.

Die Erfindung umfasst außerdem ein System bestehend aus einem Fahrerassistenzsystem und einer mit dem Fahrerassistenzsystem verbundenen fahrzeugseitigen Kamera. Das System ist dazu ausgelegt, ein Verfahren nach einem der vorhergehenden Ansprüche durchzuführen. Die Erfindung umfasst außerdem ein Fahrerassistenzsystem, welches dazu ausgelegt ist, ein Verfahren nach einem der vorhergehenden Ansprüche durchzuführen. Ein solches Fahrerassistenzsystem kann beispielsweise ein sogenannter Spurwechselassistent oder ein sogenannter Totwinkelassistent ("Blind Spot Detection") sein.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Die mit Bezug auf das erfindungsgemäße Verfahren vorgestellten bevorzugten Ausführungsformen und deren Vorteile gelten entsprechend für das erfindungsgemäße Fahrerassistenzsystem sowie das erfindungsgemäße Kraftfahrzeug.

Weitere Merkmale der Erfindung ergeben sich aus den Ansprüchen, den Figuren und der Figurenbeschreibung.

Im Folgenden wird die Erfindung nun anhand eines bevorzugten Ausführungsbeispiels, wie auch unter Bezugnahme auf die beigefügte Zeichnung näher erläutert.

Dabei zeigen:
- Fig. 1: eine schematische Darstellung eines Kraftfahrzeugs mit einer Ausführungsform des erfindungsgemäßen Fahrerassistenzsystems;
- Fig. 2: eine schematische Darstellung eines Kraftfahrzeugs mit einem Referenztotwinkelfeld und einem Referenzblickfeld; und
- Fig. 3: eine schematische Darstellung eines Kraftfahrzeugs mit einem fahrerspezifischen Blickfeld und einem daran angepassten fahrerspezifischen Totwinkelfeld.

In den Figuren sind gleiche oder funktionsgleiche Elemente mit dem gleichen Bezugszeichen versehen.

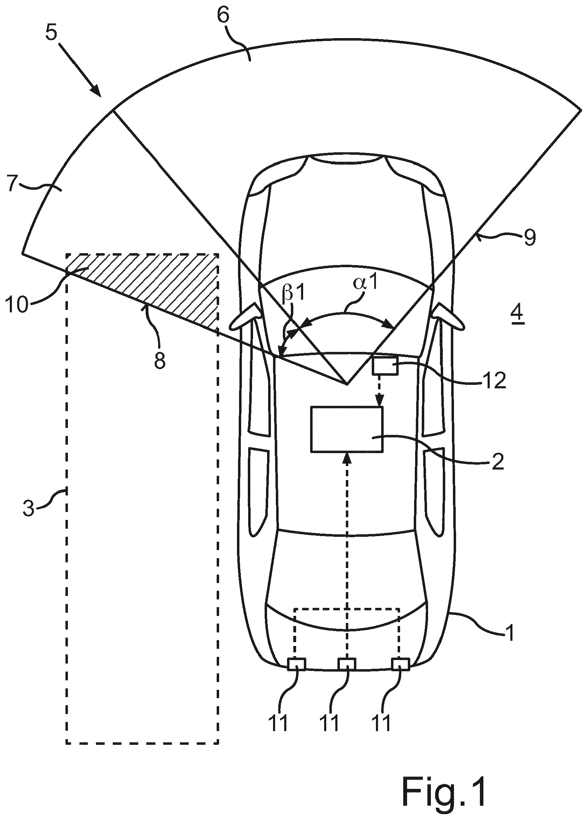

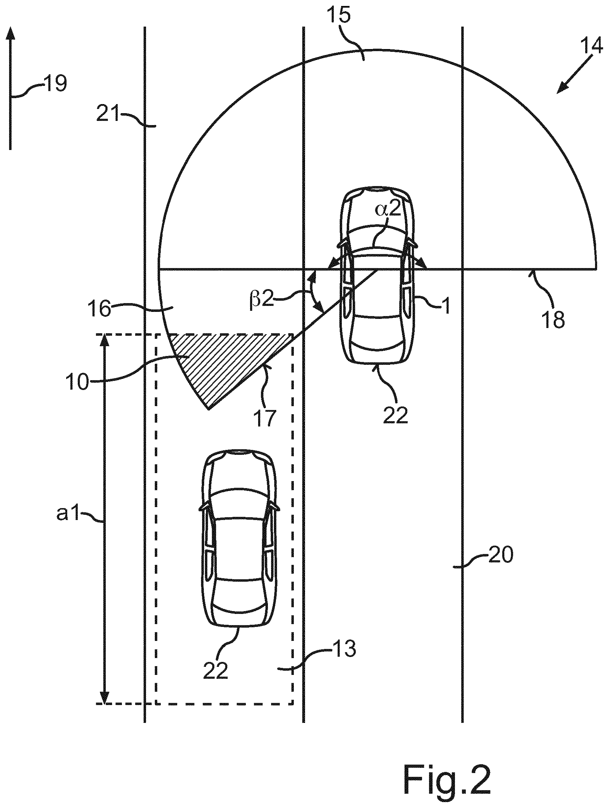

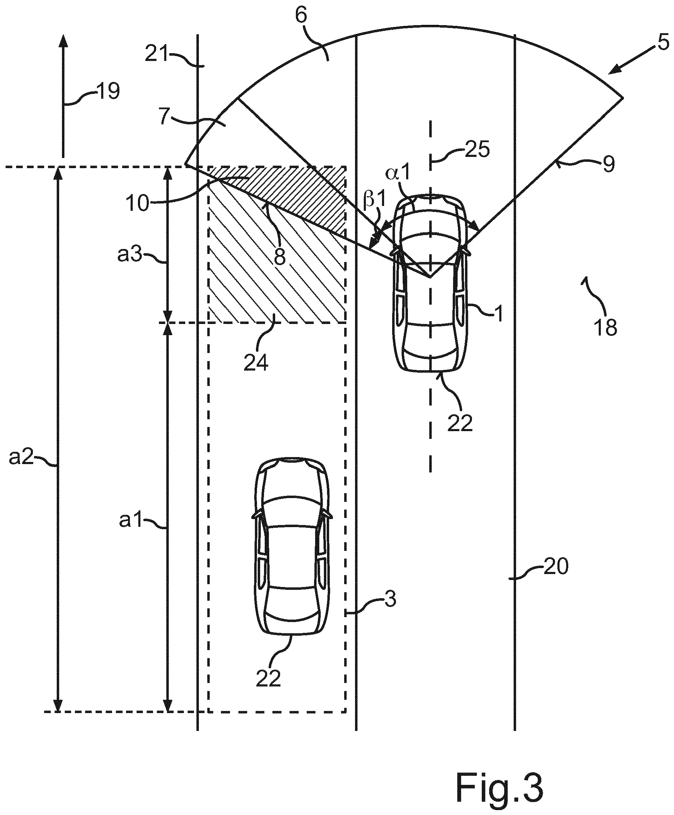

Fig. 1 zeigt ein Kraftfahrzeug 1 mit einem Fahrerassistenzsystem 2. Das Fahrerassistenzsystem 2 kann beispielsweise als ein Spurwechselassistent oder ein Totwinkelassistent ausgestaltet sein. Das Fahrerassistenzsystem 2 ist auch dazu ausgelegt, ein fahrerindividuelles Totwinkelfeld 3 in einem Umgebungsbereich 4 des Kraftfahrzeugs 1 zu bestimmen. Das fahrerspezifische Totwinkelfeld 3 ist ein für einen hier nicht dargestellten Kraftfahrzeugführer bzw. Fahrer des Kraftfahrzeugs 1 nicht einsehbarer Bereich und befindet sich hier auf einer Fahrerseite neben dem Kraftfahrzeug 1. Dabei kann der Fahrer des Kraftfahrzeugs 1 durch das Fahrerassistenzsystem 2 beispielsweise durch ein optisches und/oder akustisches Signal gewarnt werden, wenn sich ein anderes Objekt, beispielsweise ein anderes Fahrzeug 23 gemäß Fig. 2 und Fig. 3, in dem fahrerspezifischen Totwinkelfeld 3 befindet.

Darüber hinaus ist das Fahrerassistenzsystem 2 dazu ausgelegt, das fahrerspezifische Totwinkelfeld 3 in Abhängigkeit eines fahrerspezifischen Blickfeldes 5 des Kraftfahrzeugführers zu bestimmen. Das fahrerspezifische Blickfeld 5 ist in einer Projektion bzw. in einem Schnitt in einer Horizontalebene dargestellt und somit in einer Paralleldarstellung zu einer Fahrbahn, auf welchem sich das Kraftfahrzeug 1 befindet, gezeigt. Das fahrerspezifische Blickfeld 5 umfasst hier ein sogenanntes Gesichtsfeld 6 und ein sogenanntes Schulterblickfeld 7. Das Gesichtsfeld 6 zeigt hier einen Bereich, welchen der Fahrer in Normalposition, also bei geradem Blick durch eine frontseitige Windschutzscheibe des Kraftfahrzeugs 1, erfassen kann. Das Gesichtsfeld 6 ist insbesondere abhängig von einem Sehvermögen als eine physische Eigenschaft des Kraftfahrzeugführers. Das Gesichtsfeld 6 weist hier einen Öffnungswinkel a1 auf, wobei ein Gesichtsfeld eines Menschen mit einem durchschnittlichen, guten Sehvermögen einen größeren Öffnungswinkel aufweist, als ein Gesichtsfeld eines Menschen mit einem eingeschränkten, schlechten Sehvermögen. Dies bedeutet, dass der Öffnungswinkel a1 sich vergrößert, je besser das Sehvermögen des Menschen ist.

Das Schulterblickfeld 7 ist derjenige Bereich, den der Fahrer zusätzlich durch einen Schulterblick, also durch eine Drehbewegung des Kopfes, erfassen kann. Je größer die Drehbewegung bzw. der Bewegungsspielraum des Kopfes ist, desto größer ist ein Öffnungswinkel β1 des Schulterblickfeldes 7.

Das lediglich als schematisches Beispiel gezeigte Gesichtsfeld 6 und das lediglich als schematisches Beispiel gezeigte Schulterblickfeld 7 bilden hier also das fahrerspezifische Blickfeld 5, welches in der flächigen und somit 2-dimensionalen Projektionsdarstellung durch einen linksseitigen Begrenzungsrand 8 und einen rechtsseitigen Begrenzungsrand 9 begrenzt ist und einen Gesamtöffnungswinkel α1 + β1 aufweist. Der Fahrer bzw. Fahrzeugführer kann also all diejenigen Objekte visuell wahrnehmen, welche sich innerhalb des durch die Begrenzungsränder 8 und 9 begrenzten Bereiches, also innerhalb des fahrerspezifischen Blickfeldes 5, befinden. Diejenigen Objekte, welche sich in dem Umgebungsbereich 4 jenseits der Begrenzungsränder 8 und 9, also außerhalb des fahrerspezifischen Blickfeldes 5, befinden, können durch den Fahrer visuell nicht wahrgenommen werden. Diese Bereiche sollen insbesondere durch das fahrerspezifische Totwinkelfeld 3 abgedeckt werden.

Das fahrerspezifische Totwinkelfeld 3 ergibt sich im Umgebungsbereich 4 des Kraftfahrzeugs 1 derart, dass das fahrerspezifische Totwinkelfeld 3 an den Begrenzungsrand 8 angrenzt und/oder sich das fahrerspezifische Blickfeld 5 und das fahrerspezifische Totwinkelfeld 3 in einem vorgegebenen Überlappungsbereich 10 überlappen. Somit kann der Umgebungsbereich 4 durch den Fahrer und das Fahrerassistenzsystem 2 umfassend überwacht werden.

Zur Bestimmung des fahrerspezifischen Blickfeldes 5 kann das Kraftfahrzeug 1 Radarsensoren 11 aufweisen, welche den Umgebungsbereich 4, insbesondere Objekte, beispielsweise das andere Fahrzeug gemäß Fig. 2 und Fig. 3, und deren Positionen relativ zum Kraftfahrzeug 1 erfassen.

Zusätzlich weist das Kraftfahrzeug 1 in einem Innenraum eine Kamera 12, insbesondere eine sogenannte "Head-Tracking"- Kamera, aufw, welche eine Bewegung des Fahrerkopfes und/oder eine Blickrichtung des Fahrers erfassen kann. So kann beispielsweise eine Spontanreaktion des Fahrers auf das durch die Radarsensoren 11 erfasste Objekt, beispielsweise das andere Fahrzeug 23, welches sich dem Kraftfahrzeug 1 von hinten nähert, erfasst werden. Die Spontanreaktion des Fahrers tritt nämlich insbesondere dann auf, wenn das Objekt in den peripheren Sichtbereich, also in das fahrerspezifische Blickfeld 5, eintritt, also beispielsweise den Begrenzungsrand 8 überschreitet. Die durch die Radarsensoren 11 erfasste Position des Objektes zum Zeitpunkt der Spontanreaktion des Fahrers wird als die Position des Begrenzungsrandes 8 bestimmt. Ebenso kann die Position des Begrenzungsrandes 9 bestimmt werden. Somit kann auf besonders einfache Weise das fahrerspezifische Blickfeld 5 bestimmt werden.

Fig. 2 zeigt ein Kraftfahrzeug 1 mit einem Referenztotwinkelfeld 13, welches in Abhängigkeit eines Referenzblickfeldes 14 vorgegeben und in der Regel von Werk aus voreingestellt ist. Das Referenzblickfeld 14 weist ein Referenzgesichtsfeld 15 auf, welches einen Bereich umfasst, den ein Fahrer mit einem durchschnittlichen Sehvermögen visuell wahrnehmen kann. Das Referenzgesichtsfeld 15 weist hier einen Öffnungswinkel α2 von etwa 180° auf. Das Referenzblickfeld 14 umfasst außerdem ein Referenzschulterblickfeld 16 mit einem Öffnungswinkel β2. Das Referenzblickfeld 14 ist hier durch einen linksseitigen Referenzbegrenzungsrand 17 und einen rechtsseitigen Referenzbegrenzungsrand 18 begrenzt und weist einen Gesamtöffnungswinkel α2 + β2.

Das Referenztotwinkelfeld 13 ist angrenzend an den Referenzbegrenzungsrand 17 bzw. in dem Überlappungsbereich 10 mit dem Referenzblickfeld 14 überlappend bestimmt. Das Referenztotwinkelfeld 13 weist hier ein Ausmaß a1 als eine vertikale Ausdehnung auf.

Das Kraftfahrzeug 1 bewegt sich hier in einer Fortbewegungsrichtung 19 auf einer Fahrspur 20 fort. Auf einer zur Fahrspur 20 benachbarten Fahrspur 21 nähert sich einem Heckbereich 22 des Kraftfahrzeugs 1 ein anderes Fahrzeug 23, welches ebenfalls sich ebenfalls in Fortbewegungsrichtung 19 fortbewegt. Das andere Fahrzeug 23 befindet sich hier bereits innerhalb des Referenztotwinkelfeldes 13. Dabei kann der Fahrer des Kraftfahrzeugs 1 beispielsweise durch ein optisches und/oder akustisches Signal auf das andere Fahrzeug 23 hingewiesen werden und somit vor einer möglichen Kollision des Kraftfahrzeugs 1 mit dem anderen Fahrzeug 23 bei einem Spurwechsel des Kraftfahrzeugs 1 auf die benachbarte Fahrspur 21 gewarnt werden. Sobald das andere Fahrzeug 23 sich weiter in Fortbewegungsrichtung 19 fortbewegt und beispielsweise einen sich in Fortbewegungsrichtung 19 befindlichen, vorderen Bereich des Referenztotwinkelfeldes 13 verlässt, befindet sich das andere Fahrzeug 23 nach Verlassen des Referenztotwinkelfeldes 13 in dem Referenzblickfeld 14, insbesondere in dem Referenzschulterblickfeld 16, des Fahrers und kann somit visuell durch diesen erfasst werden.

Fig. 3 zeigt ein Kraftfahrzeug 1, bei welchem durch das Fahrerassistenzsystem 2 in Abhängigkeit des Sehvermögens und/oder des Drehvermögens des Kopfes des Kraftfahrzeugführers das fahrerspezifische Blickfeld 5 bestimmt wurde. Das hier dargestellte fahrerspezifische Blickfeld 5 weist einen im Vergleich zu dem Gesamtöffnungswinkel α2 + β2 des Referenzblickfeldes 14 gemäß Fig. 2 kleineren Gesamtöffnungswinkel α1 + β1 auf. Das fahrerspezifische Blickfeld 5 ist also eingeschränkt gegenüber dem Referenzblickfeld 14. Es kann beispielsweise angenommen werden, dass der Fahrzeugführer in dem Ausführungsbeispiel gemäß Fig. 3 ein schlechteres Sehvermögen und/oder einen geringeren Bewegungsspielraum des Kopfes aufweist, als der Fahrzeugführer in dem Vergleichsbeispiel gemäß Fig. 2.

In Abhängigkeit des fahrerspezifischen Blickfeldes 5 ist das fahrerspezifische Totwinkelfeld 3 festgelegt. Das fahrerspezifische Totwinkelfeld 3 weist hier eine Abmessung a2 als die vertikale Ausdehnung auf, sodass sich das fahrerspezifische Totwinkelfeld 3 bis zu dem Begrenzungsrand 8 des fahrerspezifischen Blickfeldes 5 erstreckt bzw. das fahrerspezifische Blickfeld 5 in dem Überlappungsbereich 10 überdeckt. Würde jedoch für den Fahrzeugführer mit dem gegenüber dem Referenzblickfeld 14 eingeschränkten fahrerspezifischen Blickfeld 5 ein Totwinkelfeld bereitgestellt werden, welches dem Referenztotwinkelfeld 13 entspricht, also ein Ausmaß a1 als die vertikale Abmessung aufweist, so ergäbe sich ein Bereich 24, welcher weder von dem Fahrer selbst noch von dem Fahrerassistenzsystem 2 erfasst und überwacht werden kann. Würde sich dann das andere Fahrzeug 23, welches das Kraftfahrzeug 1 beispielsweise links überholt, in dem Bereich 24 befinden, so würde ein Spurwechsel des Kraftfahrzeugs 1 auf die benachbarte Fahrspur 21 zu einer Kollision mit dem anderen Fahrzeug 23 führen, da der Fahrer das Fahrzeug 23 weder sehen kann, noch von dem Fahrerassistenzsystem 2 auf das andere Fahrzeug 23 hingewiesen wird.

Um eine solche Kollision zu verhindern, wird zur Bestimmung des fahrerspezifischen Blickfeldes 5 das Referenztotwinkelfeld 13 in Fahrtrichtung 19 nach vorne verlängert. Insbesondere wird das Ausmaß a1 des Referenztotwinkelfeldes 13 zu einer Längsachse 25 des Kraftfahrzeugs 1 um das Ausmaß a3 zu dem Ausmaß a2 als die vertikale Abmessung verlängert, sodass das fahrerspezifische Totwinkelfeld 3 an den Begrenzungsrand 8 angrenzt bzw. mit dem fahrerspezifischen Blickfeld 5 in dem Überlappungsbereich 10 überlappt. Somit kann der Fahrer solange durch das Fahrerassistenzsystem 2 auf das andere Fahrzeug 23 hingewiesen werden, bis dieses das fahrerspezifische Totwinkelfeld 3 nach vorne hin verlässt und durch den Fahrer selbst in dessen fahrerspezifischen Blickfeld 5 optisch wahrgenommen werden kann.

## Patentansprüche

1. Verfahren zum Betreiben eines Fahrerassistenzsystems (2) für ein Kraftfahrzeug (1), bei welchem ein fahrerspezifisches Totwinkelfeld (3) in einem Umgebungsbereich (4) des Kraftfahrzeugs (1) bestimmt wird, wobei zumindest ein Begrenzungsrand (8, 9) eines fahrerspezifischen Blickfelds (5) eines Kraftfahrzeugführers in Abhängigkeit eines Bewegungsverhaltens eines Kopfes des Kraftfahrzeugführers in Form einer Drehbewegung des Kopfes des Kraftfahrzeugführers bestimmt wird und in Abhängigkeit des bestimmten Begrenzungsrandes (8, 9) des fahrerspezifischen Blickfeldes (5) das Ausmaß (a2) und/oder eine örtliche Lage des fahrerspezifischen Totwinkelfelds (3) in dem Umgebungsbereich (4) des Kraftfahrzeugs (1) bestimmt wird, wobei die Drehbewegung des Kopfes des Kraftfahrzeugführers mittels einer fahrzeugseitigen Kamera (12) erfasst wird, wobei das Bewegungsverhalten des Kopfes des Kraftfahrzeugführers in Form der Drehbewegung des Kopfes des Kraftfahrzeugführers zu mehreren Zeitpunkten erfasst wird und das fahrerspezifische Blickfeld (5) aus einem aus den zu mehreren Zeitpunkten erfassten Bewegungsverhalten gemittelten Bewegungsverhalten des Kopfes bestimmt wird.

2. Verfahren nach Anspruch 1,
**dadurch gekennzeichnet, dass**
das fahrerspezifische Totwinkelfeld (3) in seinen Ausmaßen (a2) und/oder in seiner örtlichen Lage angrenzend an den Begrenzungsrand (8, 9) und/oder in einem vorgegebenen Überlappungsbereich (10) mit dem fahrerspezifischen Blickfeld (5) überlappend bestimmt wird.

3. Verfahren nach Anspruch 1 oder 2,
**dadurch gekennzeichnet, dass**
das fahrerspezifische Totwinkelfeld (3) in seinen Ausmaßen (a3) parallel zu einer Längsachse (25) des Kraftfahrzeugs (1) abhängig von dem Begrenzungsrand (8, 9) des fahrerspezifischen Blickfeldes (5) verändert wird.

4. Verfahren nach einem der vorhergehenden Ansprüche,
**dadurch gekennzeichnet, dass**
das fahrerspezifische Totwinkelfeld (3) dadurch bestimmt wird, dass ein vorgegebenes Referenztotwinkelfeld (13) in Abhängigkeit des bestimmten Bewegungsverhaltens des Kopfes des Kraftfahrzeugführers verändert wird.

5. Verfahren nach Anspruch 4,
**dadurch gekennzeichnet, dass**
das Referenztotwinkelfeld (13) bei einem im Vergleich zu dem Referenztotwinkelfeld (13) eingeschränkten Bewegungsverhalten zur Erzeugung des fahrerspezifischen Totwinkelfelds (3) entlang einer Fortbewegungsrichtung (19) des Kraftfahrzeugs (1) nach vorne hin verlängert wird.

6. Verfahren nach Anspruch einem der vorhergehenden Ansprüche,
**dadurch gekennzeichnet, dass**
das erfasste fahrerspezifische Blickfeld (5) nach Abstellen des Kraftfahrzeugs (1) abgespeichert wird und bei einem erneuten Führen des Kraftfahrzeugs (1) durch den Kraftfahrzeugführer bereitgestellt wird.

7. Verfahren nach Anspruch 6,
**dadurch gekennzeichnet, dass**
das abgespeicherte und bereitgestellte fahrerspezifische Blickfeld (5) an ein während des erneuten Führens des Kraftfahrzeugs (1) ermitteltes Bewegungsverhalten des Kopfes des Kraftfahrzeugführers angepasst wird.

8. Verfahren nach einem der vorhergehenden Ansprüche,
**dadurch gekennzeichnet, dass**
ein Objekt, welches sich im Umgebungsbereich (4) dem Kraftfahrzeug (1) von hinten nähert, sowie eine Position des Objekts, insbesondere relativ zum Kraftfahrzeug (1), in dem Umgebungsbereich erfasst werden, eine Bewegungsreaktion des Kraftfahrzeugführers auf das Objekt sowie ein Zeitpunkt der Bewegungsreaktion erfasst werden und eine Position/Lage des fahrerspezifischen Begrenzungsrandes als diejenige Position bestimmt wird, welche das Objekt zum Zeitpunkt der erfassten Bewegungsreaktion in dem Umgebungsbereich (4) aufgewiesen hat.

9. Verfahren nach Anspruch 8,
**dadurch gekennzeichnet, dass**
als das Objekt ein Kraftfahrzeug (23) erfasst wird, welches sich einem Fahrzeugheck (22) des Kraftfahrzeugs (1) in der gleichen Fortbewegungsrichtung (19) auf einer benachbarten Spur (21) von hinten nähert.

10. Verfahren nach Anspruch 8 oder 9,
**dadurch gekennzeichnet, dass**
das Objekt mittels zumindest eines fahrzeugseitigen Radarsensors (11) erfasst wird.

11. Verfahren nach einem der Ansprüche 8 bis 10,
**dadurch gekennzeichnet, dass**
die Bewegungsreaktion des Kraftfahrzeugführers mittels zumindest einer fahrzeugseitigen Kamera (12) erfasst wird.

12. Verfahren nach einem der vorhergehenden Ansprüche,
**dadurch gekennzeichnet, dass**
die fahrzeugseitige Kamera (12) eine Head-Tracking-Kamera ist.

13. Verfahren nach einem der vorhergehenden Ansprüche,
**dadurch gekennzeichnet, dass**
sich das Blickfeld (5) zusammensetzt aus einem Gesichtsfeld (6), welches abhängig von einem Sehvermögen des Kraftfahrzeugführers ist, sowie einem Schulterblickfeld (7), welches abhängig von der Drehbewegung des Kopfes des Fahrzeugführers ist.

14. Verfahren einem der vorhergehenden Ansprüche,
**dadurch gekennzeichnet, dass**
ein Schulterblickfeld (7) derjenige Bereich ist, welchen der Kraftfahrzeugführer durch einen Schulterblick in Form der Drehbewegung des Kopfes um eine Hochachse eines Fahrersitzes visuell wahrnehmen kann.

15. Verfahren nach Anspruch 14,
**dadurch gekennzeichnet, dass**
eine Ausdehnung des Schulterblickfeldes (7) abhängig ist von einem Bewegungsspielraum des Kopfes bzw. der Drehbewegung des Kopfes, welche der Kraftfahrzeugführer beim Schulterblick durchführt.

16. Verfahren nach einem der vorhergehenden Ansprüche,
**dadurch gekennzeichnet, dass**
die Begrenzungsränder des (8, 9) des fahrerspezifischen Blickfeldes (5) sich ergeben durch den Gesamtöffnungswinkel, um welchen der Kraftfahrzeugführer bei einem Schulterblick in Richtung eines Fensters einer Fahrerseite des Kraftfahrzeugs (1) sowie bei einem Blick durch eine Fahrzeugmitte des Kraftfahrzeugs (1) beim Rückwärtsfahren seinen Kopf drehen kann.

17. System bestehend aus einem Fahrerassistenzsystem (2) und einer mit dem Fahrerassistenzsystem (2) verbundenen fahrzeugseitigen Kamera (12), wobei das System dazu ausgelegt ist, ein Verfahren nach einem der vorhergehenden Ansprüche durchzuführen.

18. Kraftfahrzeug (1) mit einem System nach Anspruch 17.

## Claims

1. Method for operating a driver assistance system (2) for a motor vehicle (1), in which a driver-specific blind spot (3) in the surroundings (4) of the motor vehicle (1) is determined, wherein at least one boundary edge (8, 9) of a driver-specific field of vision (5) of a motor vehicle driver is determined as a function of a movement behaviour of the motor vehicle driver's head in the form of a turning movement of the motor vehicle driver's head, and the dimension (a2) and/or a local position of the driver-specific blind spot (3) in the surroundings (4) of the motor vehicle (1) is determined as a function of the determined boundary edge (8, 9) of the driver-specific field of vision (5), wherein the turning movement of the motor vehicle driver's head is sensed by means of a vehicle-mounted camera (12), wherein the movement behaviour of the motor vehicle driver's head in the form of the turning movement of the motor vehicle driver's head is sensed at a plurality of times, and the driver-specific field of vision (5) is determined from a movement behaviour of the head that is averaged from the movement behaviours sensed at a plurality of times.

2. Method according to Claim 1,
**characterized in that**
the driver-specific blind spot (3) is determined in its dimensions (a2) and/or in its local position adjacent to the boundary edge (8, 9) and/or is determined in an overlapping fashion in a predefined overlapping area (10) with the driver-specific field of vision (5).

3. Method according to Claim 1 or 2,
**characterized in that**
the driver-specific blind spot (3) is changed in its dimensions (a3) parallel to a longitudinal axis (25) of the motor vehicle (1) as a function of the boundary edge (8, 9) of the driver-specific field of vision (5).

4. Method according to any one of the preceding claims, **characterized in that**
the driver-specific blind spot (3) is determined by virtue of the fact that a predefined reference blind spot (13) is changed as a function of the determined movement behaviour of the motor vehicle driver's head.

5. Method according to Claim 4,
**characterized in that**
in the case of a movement behaviour which is limited in comparison with the reference blind spot (13), the reference blind spot (13) is lengthened in the forward direction along a direction of locomotion (19) of the motor vehicle (1) in order to generate the driver-specific blind spot (3).

6. Method according to any one of the preceding claims, **characterized in that**
the sensed driver-specific field of vision (5) is stored after the motor vehicle (1) is shut down, and is made available when the motor vehicle (1) is driven again by the motor vehicle driver.

7. Method according to Claim 6,
**characterized in that**
the driver-specific field of vision (5) which is stored and made available is adapted to a movement behaviour of the motor vehicle driver's head determined while the motor vehicle (1) is driven again.

8. Method according to any one of the preceding claims, **characterized in that**
an object which approaches the motor vehicle (1) from behind in the surroundings (4) and a position of the object, in particular relative to the motor vehicle (1), are sensed in the surroundings, a movement reaction of the motor vehicle driver to the object and a time of the movement reaction are sensed, and a position of the driver-specific boundary edge is determined as that position which the object had at the time of the sensed movement reaction in the surroundings (4).

9. Method according to Claim 8,
**characterized in that**
a motor vehicle (23) which approaches a motor vehicle rear (22) of the motor vehicle (1) from behind in the same direction of locomotion (19) on an adjacent lane (21) is sensed as the object.

10. Method according to Claim 8 or 9,
**characterized in that**
the object is sensed by means of at least one vehicle-mounted radar sensor (11).

11. Method according to any one of Claims 8 to 10,
**characterized in that**
the movement reaction of the motor vehicle driver is sensed by means of at least one vehicle-mounted camera (12) .

12. Method according to any one of the preceding claims, **characterized in that**
the vehicle-mounted camera (12) is a head-tracking camera.

13. Method according to any one of the preceding claims, **characterized in that**
the field of vision (5) is composed of a visual field (6) which is dependent on a visual faculty of the motor vehicle driver as well as a shoulder field of vision (7) which is dependent on the turning movement of the vehicle driver's head.

14. Method according to any one of the preceding claims, **characterized in that**
a shoulder field of vision (7) is that area which the motor vehicle driver can perceive visually by a view over the shoulder in the form of the turning movement of the head about a vertical axis of a driver's seat.

15. Method according to Claim 14,
**characterized in that**
an extent of the shoulder field of vision (7) is dependent on a freedom of movement of the head or of the turning movement of the head which the motor vehicle driver carries out when looking over his shoulder.

16. Method according to any one of the preceding claims, **characterized in that**
the boundary edges (8, 9) of the driver-specific field of vision (5) are obtained by means of the overall angle of aperture by which the motor vehicle driver can turn his head when looking over his shoulder in the direction of a window of a driver's side of the motor vehicle (1) and when looking through a centre of the motor vehicle (1) when reversing.

17. System consisting of a driver assistance system (2) and a vehicle-mounted camera (12) connected to the driver assistance system (2), wherein the system is designed to carry out a method according to any one of the preceding claims.

18. Motor vehicle (1) having a system according to Claim 17.

## Revendications

1. Procédé pour faire fonctionner un système d'assistance au conducteur (2) pour un véhicule automobile (1), selon lequel un champ d'angle mort spécifique au conducteur (3) est déterminé dans une zone environnante (4) du véhicule automobile (1), dans lequel au moins un bord de délimitation (8, 9) d'un champ de vision spécifique au conducteur (5) d'un conducteur de véhicule automobile est déterminé en fonction d'un comportement de mouvement d'une tête du conducteur de véhicule automobile sous la forme d'un mouvement de rotation de la tête du conducteur de véhicule automobile et, en fonction du bord de délimitation (8, 9) déterminé du champ de vision spécifique au conducteur (5), la dimension (a2) et/ou une position spatiale du champ d'angle mort spécifique au conducteur (3) est déterminée dans la zone environnante (4) du véhicule automobile (1), dans lequel le mouvement de rotation de la tête du conducteur de véhicule automobile est détecté au moyen d'une caméra côté véhicule (12), dans lequel le comportement de mouvement de la tête du conducteur de véhicule automobile est détecté à plusieurs instants sous la forme du mouvement de rotation de la tête du conducteur de véhicule automobile et le champ de vision spécifique au conducteur (5) est déterminé à partir d'un comportement de mouvement de la tête dont la moyenne est calculée à partir des comportements de mouvement détectés à plusieurs instants.

2. Procédé selon la revendication 1,
**caractérisé en ce que**
le champ d'angle mort spécifique au conducteur (3) est déterminé en ce qui concerne ses dimensions (a2) et/ou sa position spatiale adjacente au bord de délimitation (8, 9) et/ou dans une zone de chevauchement (10) prédéfinie qui chevauche le champ de vision spécifique au conducteur (5).

3. Procédé selon la revendication 1 ou 2,
**caractérisé en ce que**
le champ d'angle mort spécifique au conducteur (3) est modifié en ce qui concerne ses dimensions (a3) parallèlement à un axe longitudinal (25) du véhicule automobile (1) en fonction du bord de délimitation (8, 9) du champ de vision spécifique au conducteur (5).

4. Procédé selon l'une des revendications précédentes, **caractérisé en ce que**
le champ d'angle mort spécifique au conducteur (3) est déterminé en modifiant un champ d'angle mort de référence (13) prédéfini en fonction du comportement de mouvement déterminé de la tête du conducteur de véhicule automobile.

5. Procédé selon la revendication 4,
**caractérisé en ce que**
le champ d'angle mort de référence (13) est prolongé vers l'avant suivant une direction de déplacement (19) du véhicule automobile (1) dans le cas d'un comportement de mouvement rétréci par comparaison au champ d'angle mort de référence (13) pour générer le champ d'angle mort spécifique au conducteur (3).

6. Procédé selon l'une des revendications précédentes, **caractérisé en ce que**
le champ de vision spécifique au conducteur (5) détecté est mémorisé après l'arrêt du véhicule automobile (1) et est mis à disposition lorsque le véhicule automobile (1) est à nouveau conduit par le conducteur du véhicule automobile.

7. Procédé selon la revendication 6,
**caractérisé en ce que**
le champ de vision spécifique au conducteur (5), mémorisé et mis à disposition, est adapté à un comportement de mouvement de la tête du conducteur de véhicule automobile, déterminé pendant que le véhicule automobile (1) est à nouveau conduit.

8. Procédé selon l'une des revendications précédentes, **caractérisé**
**en ce qu'**un objet s'approchant par l'arrière du véhicule automobile (1) dans la zone environnante (4) ainsi qu'une position de l'objet, en particulier par rapport au véhicule automobile (1), sont détectés dans la zone environnante, une réaction de mouvement du conducteur de véhicule automobile sur l'objet ainsi qu'un instant de la réaction de mouvement sont détectés et une position/un emplacement du bord de délimitation spécifique au conducteur est déterminé(e) comme étant la position à laquelle se trouvait l'objet dans la zone environnante (4) à l'instant de la réaction de mouvement détectée.

9. Procédé selon la revendication 8,
**caractérisé**
**en ce qu'**un véhicule automobile (23) qui s'approche par l'arrière d'une partie arrière (22) du véhicule automobile (1) dans la même direction de déplacement (19) sur une voie adjacente (21) est détecté en tant qu'objet.

10. Procédé selon la revendication 8 ou 9,
**caractérisé en ce que**
l'objet est détecté au moyen d'au moins un capteur radar côté véhicule (11).

11. Procédé selon l'une des revendications 8 à 10, **caractérisé en ce que**
la réaction de mouvement du conducteur de véhicule est détectée au moyen d'au moins une caméra côté véhicule (12) .

12. Procédé selon l'une des revendications précédentes, **caractérisé en ce que**
la caméra côté véhicule (12) est une caméra de suivi de la tête.

13. Procédé selon l'une des revendications précédentes, **caractérisé en ce que**
le champ de vision (5) se compose d'un champ visuel (6), qui dépend d'une aptitude visuelle du conducteur de véhicule, ainsi que d'un champ de vision au niveau des épaules (7), qui dépend du mouvement de rotation de la tête du conducteur de véhicule.

14. Procédé selon l'une des revendications précédentes, **caractérisé**
**en ce qu'**un champ de vision au niveau des épaules (7) est la zone que le conducteur de véhicule automobile peut percevoir visuellement par un regard au niveau des épaules sous la forme du mouvement de rotation de la tête autour d'un axe vertical d'un siège de conducteur.

15. Procédé selon la revendication 14,
**caractérisé**
**en ce qu'**une étendue du champ de regard au niveau des épaules (7) dépend d'une marge de mouvement de la tête ou du mouvement de rotation de la tête que le conducteur de véhicule automobile effectue lors du regard au niveau des épaules.

16. Procédé selon l'une des revendications précédentes, **caractérisé en ce que**
les bords de délimitation (8, 9) du champ de vision spécifique au conducteur (5) résultent de l'angle d'ouverture total dont le conducteur de véhicule automobile peut tourner la tête lors d'un regard au niveau des épaules en direction d'une fenêtre d'un côté conducteur du véhicule automobile (1) ainsi que lors d'un regard à travers un centre de véhicule du véhicule automobile (1) lors de la marche arrière.

17. Système constitué d'un système d'aide au conducteur (2) et d'une caméra côté véhicule (12) reliée au système d'aide au conducteur (2), dans lequel le système est configuré pour mettre en œuvre un procédé selon l'une des revendications précédentes.

18. Véhicule automobile (1) comprenant un système selon la revendication 17.
